# EUROPEAN PATENT SPECIFICATION

(11) **EP 2 490 056 B1**
(45) Date of publication and mention of the grant of the patent: **10.02.2016**
(21) Application number: 11001303.4
(22) Date of filing: 17.02.2011
(51) Int. Cl.: G02B 6/44, G02B 6/38

(54) **Cable connector holder, cable connector tray holder and cable connector device**
Kabelverbinderhalterung, Kabelverbinderwannenhalterung und Kabelverbindervorrichtung
Support de connecteur de câble, support de plateau de connecteur de câble et dispositif de connecteur de câble

(43) Date of publication of application: 22.08.2012
(73) Proprietor: Tyco Electronics Raychem BVBA, 3010 Kessel-Lo (BE)
(72) Inventor: Vastmans, Kristof, 3370 Boutersem (BE)
(74) Representative: Grünecker Patent- und Rechtsanwälte PartG mbB

(56) References cited:
- US-A1- 2001 010 741
- US-A1- 2007 047 893
- US-B1- 6 786 647

## Description

The present invention, which finds preferably application in the field of telecommunication technology, relates to a cable connector holder, especially to an optical fiber cable connector holder, to a cable connector tray holder for supporting such a cable connector holder and to a cable connection device comprising such a cable connector tray holder, a cable connector holder and a cable connector tray.

Specifically, the present invention relates to the field of last-mile telecommunications such as Fiber-to-the-home (FTTH) or the like, wherein cable connection devices are used. Conventionally, such a cable connection device comprises a cable connector tray holder supporting at least two cable connectors connectable with each other, wherein one of said at least two cable connectors is supported by a cable connector tray and the other one by an adaptor. The cable connector tray holder is normally releasably secured against the tray holder such that in case of malfunction of the optical line ranging from the cable connector tray, diagnostics and/or cleaning measures can be performed after releasing the cable connector tray from said cable connector tray holder. However, in case of malfunction affecting the optical line of the cable connector supported by the adaptor, diagnostics or cleaning measures cannot be simply performed without the necessity of releasing at least one of the cable connector tray and the adaptor from the cable connector tray holder. Such disassembling action may further have a risk of damaging the optical fiber element of the cable connector supported by the cable connector tray and the adaptor, respectively.

Moreover, adaptors for optical fibre connectors are known, which are configured to protect at least the signal transmitting end of the optical fibre element received and supported by the optical fibre connector against environmental influences. Such an adaptor is for instance disclosed in EP 1 925 958 A1. The adaptor is slidable mounted on the optical fibre connector, wherein the adaptor is spring-loaded to slide in parallel with the longitudinal axis of the optical fibre connector. The adaptor further comprises a shutter made of a flexible material, which shutter is suited to cover the signal transmitting end of the optical fibre element to protect it against environmental influences. The shutter is held in the protection state, i.e. the covering state of the signal transmitting end of the optical fibre element, by the spring load caused by spring means provided with the adaptor. By retraction of the adaptor in longitudinal direction of the optical fibre connector away from its mating end, the shutter is removed from the signal transmitting end and provides free access thereto. However, even if such an adaptor is used for the above-mentioned cable connector device, at least one of the adaptor and the cable connector tray is further required to be dissembled for providing access to the respective optical fibre element. Additionally, the known optical fibre connector to which the adaptor is fixedly mounted provides a bulky structure. Furthermore, conventional optical fibre connectors cannot be used due to further means required to be attached to the optical fibre connector for ensuring the slidable function of the adaptor with the shutter.

It is an object of the present invention to provide means dealing with the above-mentioned problems. Specifically, the present invention aims to provide a cable connector holder, preferably for an optical fiber cable, which cable connector holder is improved in operating feature and further preferably in environmental influence preventing feature. A further object of the present invention is to provide a cable connector tray holder for supporting such a cable connector holder. Additionally, it is a further object of the present invention to provide a cable connection device allowing simple operating functions such as diagnostic and/or cleaning measures and which further preferably provides environmental influence preventing characteristics.

According to the first aspect of the present invention, the above object is solved by a cable connector holder having the features as specified in claim 1. The cable connector holder comprises particularly holding means adapted to at least partially encompass a cable connector, preferably an optical fibre cable connector in circumferential direction thereof, thereby forming a passageway for the cable connector. In other words, the holding means surrounds the cable connector in circumferential direction thereof, wherein the holding means provides in said circumferential direction two circumferential ends which preferably oppose each other with a gap therebetween. Particularly, the holding means may substantially have a U- or a C-shaped cross-section. More preferably, the holding means is adapted to fit on the cable connector at least partially in circumferential direction or further preferably in a complete manner in order to stably hold the cable connector in the passageway. The holding means may be preferably commonly configured in order to hold the cable connector, which cable connector may be for instance an LC-connector or SC-connector. However, the present invention is not to be construed to be limited to such connector types only. The cable connector holder according to the present invention may be adapted such that any type of cable connector provided for transmitting a signal can be held thereby. For the present invention, however, optical fibre cable connectors are particularly preferred.

The holding means may further preferably provide in the passageway securing means for securing the cable connector in longitudinal direction of the passageway in order to prevent a slipping out of the cable connector. Particularly, the holding means may be preferably adapted to receive the cable connector from one opening end side, which denotes an insertion opening end, such that the mating end of the cable connector is accommodated in the passageway of the holding means. Alternatively, the mating end of the cable connector may preferably slightly protrude the holding means at the opposed opening end constituting a receiving opening end for receiving a mating end of the cable connector to be connected with the cable connector held by the cable connector holder.

More preferably, said receiving opening end of the holding means is adapted to fit circumferentially the mating end of the cable connector to prevent deviations in side directions of the cable connector when said cable connector is connected to the associated cable connector. The holding means are further preferably adapted to allow removing of the cable connector from the receiving opening end side thereof. In other words, the holding means are preferably configured to receive the cable connector to be held from the insertion opening end and to allow removing thereof through the receiving opening.

The cable connector holder according to the present invention further comprises connection means for connecting the cable connector holder to a cable connector tray holder, wherein the connection means are adapted to pivotably support the cable connector holder about a pivot axis extending in a direction transverse to the longitudinal direction of the passageway. In the sense of the present invention, a transverse direction corresponds to an angle formed between the pivot axis and the longitudinal direction of the passageway in the range of from more than 10° to 90°, wherein a substantially perpendicular extension of the pivot axis with respect to the longitudinal direction of the passageway relates to an angle of about 90°. Such an angle is preferred to provide a maximum radian in pivot direction around the pivot axis. According thereto, the receiving opening, i.e. the mating end of the cable connector to be held by the cable connector holder is freely accessible in a pivoted state of the cable connector holder, thereby simplifying diagnostics and/or cleaning measures. Particularly, such operations can be simply performed in a secured and pivoted state of the cable connector holder with respect to cable connector tray holder even if a cable connector tray is likewise mounted to the cable connector tray holder.

According to a further preferred embodiment of the present invention as defined in claim 2, the connection between the cable connector holder and the cable connector tray holder is further simplified.

Further preferably, as defined in claim 3, the at least one ring element may preferably be arranged in a cross-sectional center plane of the holding means which center plane accommodating the center axis of the passageway. In other words, the at least one ring element is preferably arranged on a lower side of the holding means, which lower side is adapted to face the upper surface of the cable connector tray holder, wherein the at least one ring element is provided in a center axis of the lower surface side of the holding means, which lower surface side center axis lies in the center plane of the holding means. Said at least one ring element may preferably have a U or C shape with the opening directing away from the lower surface side of the holding means. According to said configuration, the cable connector holder can be simply connected preferably by means of snap fit to a pin element, preferably to a rod element provided with the cable connector tray holder and constituting tray holder connection means. As a matter of course, the connection performed between said at least one ring element and the tray holder connection means are configured to allow pivoting of the cable connector holder about the pivot axis extending coaxially with the center axis of the at least one ring element. For this, the inner circumferential surface of the at least one ring element is preferably round shaped. However, said at least one ring element can adobe any shape suitable for allowing pivoting of the cable connector holder mountable to the cable connector tray holder.

In an alternative preferred embodiment, the connection means may provide a pin element, preferably a rod element extending coaxially with the pivot axis and being adapted to be received by a tray holder ring element provided with the cable connector holder, wherein the ring element and the pin element may have a shape as described above, i.e. a shape generally enabling the pivot action of the cable connector holder mounted to the cable connector tray holder. Further preferably, the cable connector holder may be provided with more than one ring element along the pivot axis, respectively. More preferably, the at least one ring element may be circle shaped and adapted to receive the pin element or the rod element by insertion through the opening provided by the ring element. Thus, the cable connector holder may be substantially undetachably supportable by the cable connector tray holder. Furthermore, the cable connector to be held by the cable connector holder may be inserted into the passageway after the cable connector holder is mounted to the cable connector tray holder. Alternatively, the cable connector may also be inserted into the cable connector holder before said cable connector holder is mounted to the cable connector tray holder. Hence, a degree of freedom of usage of the cable connector holder is improved.

In a further preferred embodiment according to claim 4, the pivoting of the cable connecting holder can be more simply performed. Preferably, the actuation portion is formed by a ridge part protruding away from the upper surface side of the holding means to allow a pushing operation in the pivoting direction of the cable connector holder, thereby further simplifying the pivoting operation of the cable connector holder. The upper surface of the holding means may be preferably adapted to provide a secure grip for a user operating the cable connector holder. Further preferably, in the further preferred embodiment according to claim 5, the leverage effect is maximized.

According to a further preferred embodiment as specified in claim 6, the cable connector holder can be reliably and releasably secured against the cable connector tray holder. Additionally, the securing means may be formed of snap means as commonly known and may be adapted to fit into a securing means receiving opening provided with the cable connector tray holder in order to further improve alignment of the cable connector holder on said cable connector tray holder.

In a further preferred embodiment according to claim 7, the cable connector holder can be simply and reliably mounted to the cable connector, wherein the two parts of the cable connector may be preferably further adapted to provide a releasing function in order to be repeatably usable. According thereto, the cable connector may be replaced in case of damage without the necessity of likewise replacing the cable connector holder. For this, the two parts of the cable connector holder may be preferably provided with snap means allowing the releasably securing of the two parts against each other.

According to a further aspect of the present invention, a cable connector tray holder as defined in claim 8 is provided. Particularly, said cable connector tray holder comprises tray holder connection means which are configured to pivotably support the cable connector holder about a pivot axis extending in a direction transverse to a mating direction of the cable connectors mountable to said cable connector tray holder. Preferably, the tray holder connection means may be configured as described above in line with the cable connection holder, wherein similar effects may be obtained. Further preferably, the cable connector tray holder may comprise the cable connector holder as described above in order to provide a pre-assembled assembly by which a connection between two cable connectors supported by the cable connector tray holder can be faster achieved.

More preferably, the cable connector tray holder is preferably configured to support more than one cable connector holder. Further preferably, the cable connector tray holder is adapted to releasably support at least one cable connector holder. That is, particularly in case of a pre-assembled cable connector tray holder as described above, the cable connector tray holder and the cable connector holder may be configured such that the cable connector holder is releasably supported by the cable connector tray holder, thereby allowing a replacement of the pre-assembled cable connector holder in case of damage. Moreover, the cable connector tray holder may be adapted to support a combination of at least one pre-assembled cable connector holder with at least one cable connector holder which is mountable to the cable connector tray holder at the place of usage.

In a further preferred embodiment of the present invention according to claim 10, an alignment between the two cable connectors to be connected with each other can be further improved. Thus, the tray holder gateway may be configured to guide the cable connector to be passed therethrough such that a connection between the two cable connectors can be achieved without manually adjusting their mating ends, respectively. The tray holder gateway may preferably have a shape corresponding to an outer shape of the cable connector to be passed therethrough. Further preferably, the tray holder gateway may have a rectangular shape. Particularly, tray holder gateway is provided such that the center axis of the passageway of the cable connector holder mountable to the cable connector tray holder is aligned with the center axis of the tray holder gateway in the mounted state of the cable connector holder. Further preferably, the tray holder gateway has a size corresponding to a size of the passageway.

According to a further preferred embodiment of the present invention as specified in claim 11, a sealing feature between the cable connector holder mountable on the cable connector tray holder and the tray holder gate with the tray holder gateway can be achieved. Preferably, the tray holder gate may have an outer shape corresponding to an outer shape of the holding means of the cable connector holder to be mounted to the cable connector tray holder. Further preferable, the tray holder gate provides an abutment surface on a side adapted to face the receiving opening of cable connector holder to abut against an associated cable connector holder abutment surface provided at the front face of the receiving opening end portion. Additionally, the tray holder gate and the tray holder gateway may be preferably adapted on the opposed side to receive a sealing cap or the like for sealingly covering the tray holder gateway. Thus, in case only the cable connector holder is mounted on said cable connector tray holder, the receiving opening of the cable connector can be reliably protected against environmental influences. Moreover, light safeness can be obtained. In other words, due to the abutment of the cable connector holder against the tray holder gate and the coverage of the tray holder gateway, light transmitted by the optical fibre element cannot escape to an outside of the cable connector holder and the cable connector tray holder, respectively.

Specifically, the tray holder gate provides on a side adapted to face the cable connector opening an inner circumference radially limiting the tray holder gateway, which inner circumference is configured to receive the front face of the receiving opening portion of the cable connector while ensuring pivoting of the cable connector holder without interference with the tray holder gate. For this, any conventional measures such as a recess on the upper rim defining the tray holder gateway or an inclined upper rim of the tray holder gateway or the like may be feasible. According thereto, the sealing feature can be achieved by simple measures without the necessity of providing a seal or the like. However, a seal between the opposed faces of the cable connector holder and the tray holder gate may also be thinkable and not excluded by the present invention.

In a further preferred embodiment of the present invention according to claim 12, the tray holder gateway may be manually or automatically moved by means of compulsory guide between a closed position, in which the tray holder gateway is covered by the tray holder shutter and an open position, in which the tray holder gateway is freely accessible and passable for the cable connector. The manual movement may be preferably achieved by a guiding pin coupled to the tray holder shutter and accessible from an outer side of the cable connector tray holder. for the automatic movement, the cable connector tray holder may be preferably configured as specified in claim 13. In this context, a tray holder receiving compartment denotes a section provided with the cable connector tray holder, which section is adapted to receive the cable connector to be connected with the cable connector held by the cable connector holder. Preferably, the cable connector to be received by the tray holder receiving compartment may be accommodated in a commonly known cable connector tray, wherein the tray holder receiving compartment is further preferably adapted to secure said cable connector tray. More preferably, the tray holder receiving compartment may provide at least one receiving channel being further preferably substantially U-shaped with the opening directing away from the cable connector tray holder. For reliably guiding and securing the cable connector tray, respective guiding and securing means are provided with the tray holder receiving compartment.

According to a further aspect of the present invention, a cable connection device as specified in claim 14 is proposed. The respective parts of the cable connection device may be preferably configured as described above, thereby achieving similar effects. With the cable connection device of the present invention, the cable connection between two cable connectors can be simply and reliably performed. Furthermore, diagnostic and/or cleaning measures can be simply conducted on the cable connector held by the cable connector holder without the necessity of disassembling at least one of the cable connector holder and the cable connector tray.

According to a further preferred embodiment of the present invention, the cable connector tray comprises a tray housing with a cable opening for receiving and guiding a cable to an inside of the tray housing and a cable connector opening for receiving a cable connector. The cable connector tray is adapted to movably support the cable connector relative to the tray housing between a mating position for connecting the cable connector with a mating cable connector and a retracted position corresponding to a disconnecting position, at which the cable connector is disconnected from the mating cable connector. At the retracted position, the cable connector is further preferably completely retracted into the tray housing. The mating cable connector refers to the cable connector held by the cable connector holder.

For preventing squeezing of the cable, the cable opening may be preferably provided at its boundary defining the opening diameter with a flexible material such as a jelly or further sealing material and the like, which material comes preferably sealingly in contact with the outer surface of the cable part passing the cable opening and which material does not be so rigid as to damage the cable and/or the signal transmitting element guided by the cable. The cable connector opening has a size for let passing therethrough preferably the connector. The cable connector can be formed of a male cable connector or a female cable connector. In case of providing equal kinds of cable connector types, i.e. a female cable connector or a male cable connector, an adapter can be preferably interconnected therebetween. In the event, the adapter is connected to the cable connector which is accommodated inside the tray housing of the cable connector tray, the combination of the cable connector with the adapter is to be understood also as a "cable connector". For this combined configuration, the cable connector connected to the adapter denotes a cable connector part. Accordingly, the slidable cable connector holder preferably provided for holding the cable connector may be either connected to the adapter and/or the cable connector part which generally supports the signal transmitting end of the cable. Preferably, the slidable cable connector holder may hold the cable connector (cable connector part or adapter) by means of form closure such as clamping means, snapping means or the like, by means of force closure or by means of adhesive bond. Further alternatively, the slidable cable connector holder may be integrally formed with the connector. In general, any feasible means suitable for holding the cable connector can be provided with the slidable cable connector holder.

Based on the above configuration, the cable connector may be held completely inside the tray housing to be not directly exposed to the environmental influences outside the cable connector tray. Thus, the protection property may be enhanced. Further, in a mounted state of the cable connector tray and due to the slidable cable connector holder, the cable connector can be simply moved in a pre-aligned manner toward the mating position for connecting the cable connector with the mating cable connector held by the cable connector holder. The mating position for the cable connector corresponds preferably to a most forward slide position of the slidable cable connector holder on the tray housing. In this context, with respect to tray housing sides, a front side corresponds to the side of the tray housing accommodating the cable connector opening, a rear side is constituted by the side of the tray housing which includes the cable opening. Left, upper, right and lower sides of the tray housing are denoted by the lateral sides, respectively, each of which connects the front and rear sides, and which are arranged subsequently in circumferential direction of the tray housing, wherein the upper side opposes the lower side and the left side opposes the right side, respectively. Further particularly, the upper side of the tray housing is the side which slidably supports the slidable cable connector holder.

Further, the retracted position for the cable connector corresponds preferably to a rearward position of the slidable cable connector holder. In other words, the retracted position corresponds preferably at least to a position of the slidable cable connector holder at which disconnection of the cable connector from the mating cable connector is just obtained. Further preferably, the retracted position denotes a most rearward position which is further distant from the cable connector opening than the position at which the cable connector is just disconnected from the mating cable connector. Thereby, additional functions may be provided with the cable connector tray when the cable connector is moved from a disconnecting position at which the cable connector is just disconnected toward the retracted position.

More preferably, the cable connector tray may comprise on a lateral side of the tray housing adapted to be received by the receiving compartment of the cable connector tray holder, a retractable securing means which cooperates with the sliding position of the slidable cable connector holder. Particularly, at the retracted position of the slidable connector holder, the retractable securing means is adapted to be fully retracted into the inside of the tray housing, thus allowing releasing of the cable connector tray from the cable connector tray holder without interference. More preferably, the slidable cable connector holder may comprise a securing means engagement which is configured to engage an engagement protrusion formed with the retractable securing means inside the tray housing while said slidable connector holder is moved from the position corresponding to the disconnection of the cable connector towards the retracted position, wherein the retractable securing means is moved toward the inside of the tray housing, i.e. completely retracted.

Further preferably, the cable connector tray may provide a loop storage area for accommodating a cable overlength in a looped manner. Particularly, the tray housing may preferably comprise loop guiding means for guiding the looped cable to be stored in the loop storage area. Alternatively, the tray housing may preferably comprise snapping or clamping means for securing an insert forming the loop storage area in the tray housing. Said insert may be further preferably formed with loop guiding means for guiding and storing the looped cable in the tray housing, respectively.

According to a further preferred embodiment, the cable connector tray may be provided with a spring-loaded optical shutter, which closes and opens the cable connector opening dependent on a movement of the cable connector. Particularly, the optical shutter may be compulsory moved by contact with the cable connector slided forward towards an outside of the cable connector tray to let pass the cable connector through the cable connector opening. By means of the spring-load, the optical shutter will close the cable connector opening when the cable connector is retracted toward the inside of the tray housing by motion of the sliding connector holder toward the retracted position.

In a further preferred embodiment, the cable connector tray may comprise a sealing tag on an outer surface of the tray housing, which sealing tag is preferably adhered thereto and further preferably coupled to the slidable connector holder. More preferably, the sealing tag is made of a rupturable material, whereby a user of the cable connector tray can visually simply identify whether the cable connector tray is new or has been already used. Further preferably, the sealing tag is adhered to the tray housing and the slidable cable connector holder at a position of the slidable cable connector holder corresponding to a retracted position of the cable connector held inside the tray housing. In case, the sealing tag is unbroken, the user of the cable connector tray can simply identify that the cable connector tray has not been used before. In case the sealing tag is broken, the cable connector tray is to be assumed as already being used.

In a further preferred embodiment, the sealing tag comprises an RFID (Radio Frequency Identification)-tag by which the cable connector tray can be electronically identified. In other words, by means of said RFID-tag and a thereto associated reading device, a user of the cable connector tray can simply identify which connection, for instance specific connection between a provider cable and a cable leading to a dwelling unit, shall be or is provided with said cable connector tray.

Even though, the present invention has been described in regard of several preferred embodiments, each having a specific configuration, each preferred embodiment may be appropriately adapted to be provided with one or more of the features realized with the other preferred embodiments, respectively.

The present invention will now be described in further detail by referring to preferred embodiments depicted in the accompanying drawings, from which further objects and positive effects of the present invention may be derivable. In these drawings:
- Figure 1: shows a perspective side view of a cable connector holder mounted on a cable connector tray holder according to a preferred embodiment of the present invention;
- Figure 2: shows a cross-sectionally side view of a pivoted cable connector holder mounted to the cable connector tray holder as shown in Figure 1;
- Figure 3: shows a cross-sectionally side view of a non-pivoted cable connector holder mounted to the cable connector tray holder as shown in Figure 1;
- Figure 4A: shows a perspective side view of a cable connector tray mountable to the cable connector tray holder in Figures 1 to 3;
- Figure 4B: shows a perspective side view of an open cable connector tray as shown in Figure 4A;
- Figure 5: shows an enlarged perspective side view of securing means and optical shutter means provided with the cable connector tray as shown in Figure 4B; and
- Figure 6: shows a side view of the open cable connector tray mounted on the cable connector tray holder.

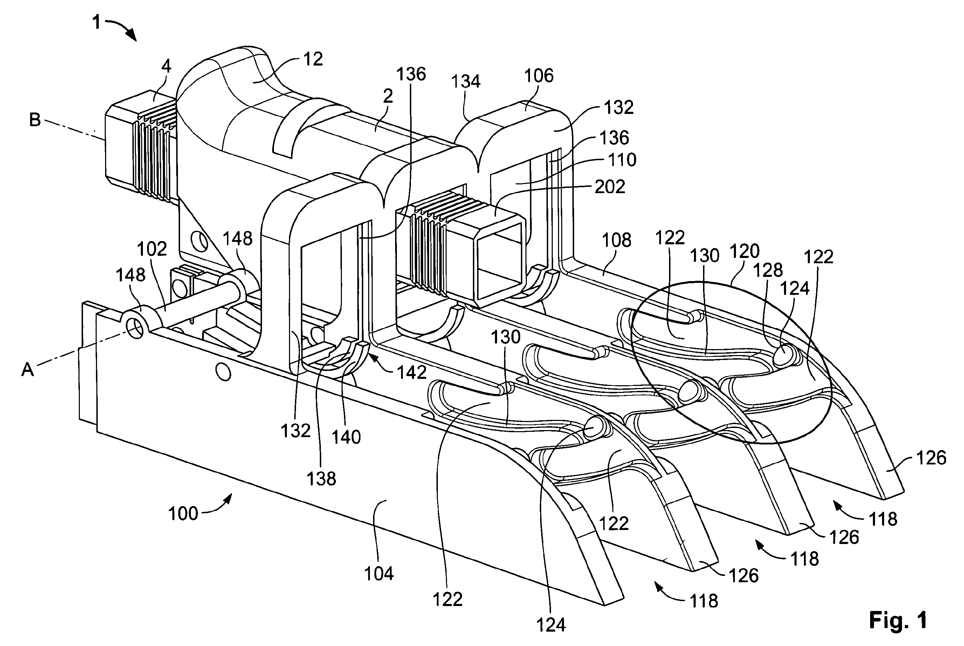

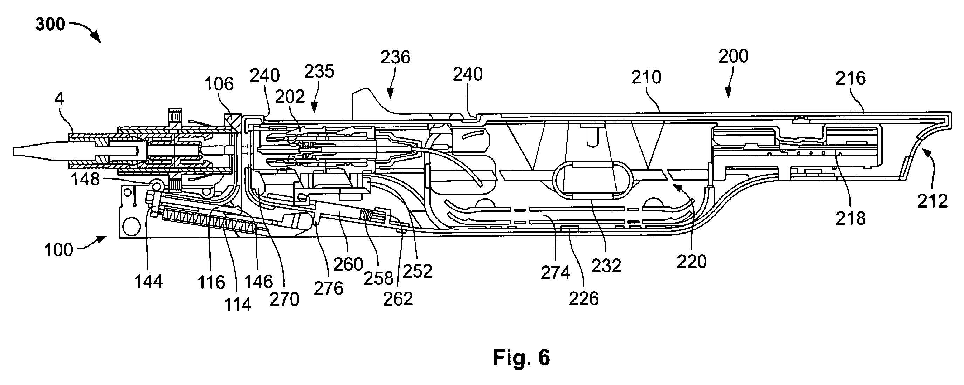

Figure 1 shows a perspective side view of a cable connector holder 1 mounted on a cable connector tray holder 100 according to a preferred embodiment of the present invention. The cable connector tray holder 100 comprises a tray holder support 104 providing three tray holder receiving compartments 118 substantially having cross-sectionally a U-shape and extending in longitudinal direction of the cable connector tray holder 100 by a predetermined length. The longitudinal length of the tray holder receiving compartment 118 is adapted to receive and releasably secure a cable connector tray 200 (Figure 6). The number of the tray holder receiving compartments 118 is not to be construed to be limited to three as shown in Figure 1. The cable connector tray holder may be formed with at least one tray holder receiving compartment 118 for receiving and securing the cable connector tray 200.

The tray holder receiving compartment 118 comprises tray holder guiding and securing means 120 for guiding the cable connector tray 200 and securing it against the cable connector tray holder 100. Particularly, the tray holder guiding and securing means 120 is provided inside the U-shaped channel of the tray holder receiving compartment 118 at a lateral side of a tray holder receiving compartment arm 126. Thereby, stability of the mounted cable connector tray 200 is enhanced. The tray holder receiving compartment 118 has an inner width corresponding substantially to an outer width of the cable connector tray 200 to be received. The inner width is defined by opposed surface sides of the facing tray holder receiving compartment arms 126. Moreover, each tray holder receiving compartment arm 126 provides inside the tray holder receiving compartment 118 said tray holder guiding and securing means 120. In other words, the tray holder receiving compartment 118 provides preferably a pair of tray holder guiding and securing means 120, wherein each tray holder guiding and securing means 120 is formed at a lateral side of the tray holder receiving compartment arm 126 such that the pair of tray holder guiding and securing means 120 oppose each other in the tray holder receiving compartment 118.

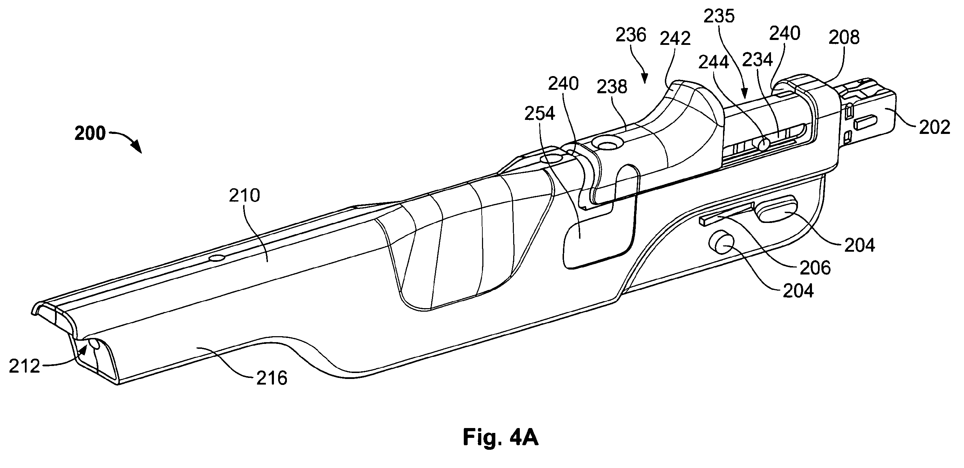

As further shown in Figure 1, the tray holder guiding and securing means 120 comprises specifically a pair of tray holder guidance's 122 formed by recesses in the lateral side of the tray holder receiving compartment arm 126 for receiving and guiding an associated guiding protrusion 204 of the cable connector tray 200 (Fig. 4A). The tray holder guidance's 122 extend from a receiving side of the cable connector tray holder 100 toward an inside of the tray holder receiving compartment 118. The receiving side of the cable connector tray holder 100 corresponds to the side forming the tray holder support surface 108. The tray holder guidance 122 is adapted to obliquely receive the cable connector tray 200. Specifically, while receiving the cable connector tray 200, the longitudinal axis of the cable connector tray 200 extends oblique to the longitudinal axis of the tray holder receiving compartment 118. The tray holder guidance 122 is further configured to guide the cable connector tray 200 from said oblique receiving state toward a parallel securing state, in which securing state the longitudinal axis of the cable connector tray 200 extends substantially in parallel to the longitudinal axis of the receiving compartment 118, i.e. the longitudinal axis of the cable connector tray holder 100.

The tray holder guidance 122 cooperates with the tray holder securing means 124, which tray holder securing means 124 is arranged at the receiving opening portion of the tray holder guidance 122. Said tray holder securing means 124 comprise an abutment face 128 for abutting a retractable securing protrusion 206 provided with the cable connector tray 200. As particularly shown in Figure 1, the abutment face 128 forms part of a recess wall surface 130 defining the recess-shaped tray holder guidance 122, wherein the abutment face 128 forms an end of the recess wall surface 130 in the area providing the receiving opening of the tray holder guidance 122. The abutment face 128 directs substantially in longitudinal direction of the tray holder receiving compartment 118 to provide a stop for the cable connector tray 200 at least in longitudinal direction of the cable connector tray holder 100 and additionally away therefrom.

Although not shown in the accompanying Figures, the tray holder guidance 122 may preferably be alternatively formed by a protrusion protruding from the lateral surface of the tray holder receiving compartment arm 126 toward the center axis of the tray holder receiving compartment 118, wherein such a protruding-shaped tray holder guidance is adapted to cooperate with an associated recess-shaped guiding formed with the cable connector tray 200. Furthermore, the abutment face 128 may be than provided by a recess portion formed in the protruding-shaped tray holder guidance, respectively. In general, further shapes of the tray holder guiding and securing means 120 adapted to cooperate with associated means formed with the cable connector tray 200 may be feasible as long as the cable connector tray 200 may be guided into the tray holder receiving compartment 118 and secured against the cable connector holder 100 in a mounted state of said cable connector tray 200.

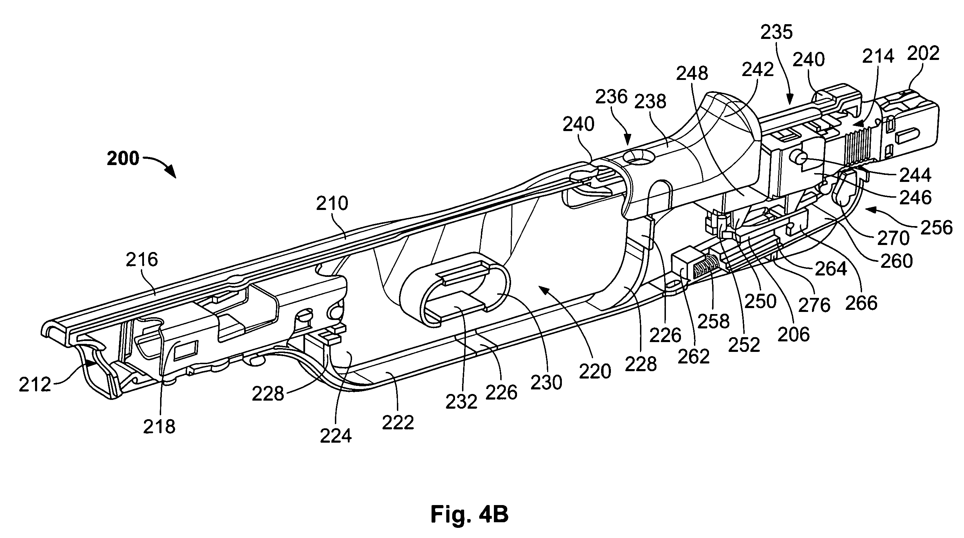

As further shown in Figure 1, the cable connector tray holder 100 comprises a tray holder gate 106 protruding the tray holder support surface 108 substantially perpendicular. The tray holder gate 106 is substantially U-shaped and fixed to the cable connector tray holder 100 on said tray holder support surface 108. Preferably, the tray holder gate 106 is integrally formed with the cable connector tray holder 100. Due to the U-shape, a tray holder gateway 110 is provided, which communicates with the tray holder receiving compartment 118, wherein the tray holder gate 110 has basically a width corresponding to the inner width of the tray holder receiving compartment 118. The tray holder gateway 110 is adapted to receive a cable connector 202 accommodated in the cable connector tray 200 as described in detail further below with respect to Figures 4A and 4B. Accordingly, the tray holder gateway 110 has an opening width sufficient to let pass through the tray holder gateway 110 the cable connector 202 of the cable connector tray 200. The shape of the tray holder gateway 110 may preferably correspond to the outer shape of the cable connector 202 of the cable connector tray 200 to provide a small sized tray holder gate 106.

Additionally, the tray holder gate 106 has an outer shape corresponding to an outer shape of the cable connector holder 1 mountable to the cable connector tray holder 100. The tray holder gate 106 provides a tray abutment face 132 for facing and, further, preferably for abutting a longitudinal end face of the cable connector tray 200 in its mounted state. The tray abutment face 132 is arranged on a side facing the tray holder receiving compartment 118. On an opposed side of the tray holder gate 106, it forms a holder abutment face 134 for at least facing and, further, preferably abutting a front face 16 of the cable connector holder 1. By abutment of the tray holder gate 106 with the cable connector holder 1 and/or the cable connector tray 200, a sealing feature may be provided accordingly. For this, the tray abutment face 132 and the holder abutment face 134 have preferably a shape corresponding to a tray front face 208 of the cable connector tray 200 and the front face 16, respectively, such that a continuous abutment between the tray holder gate 106 and the cable connector holder 1 and/or the cable connector tray 200 is achieved.

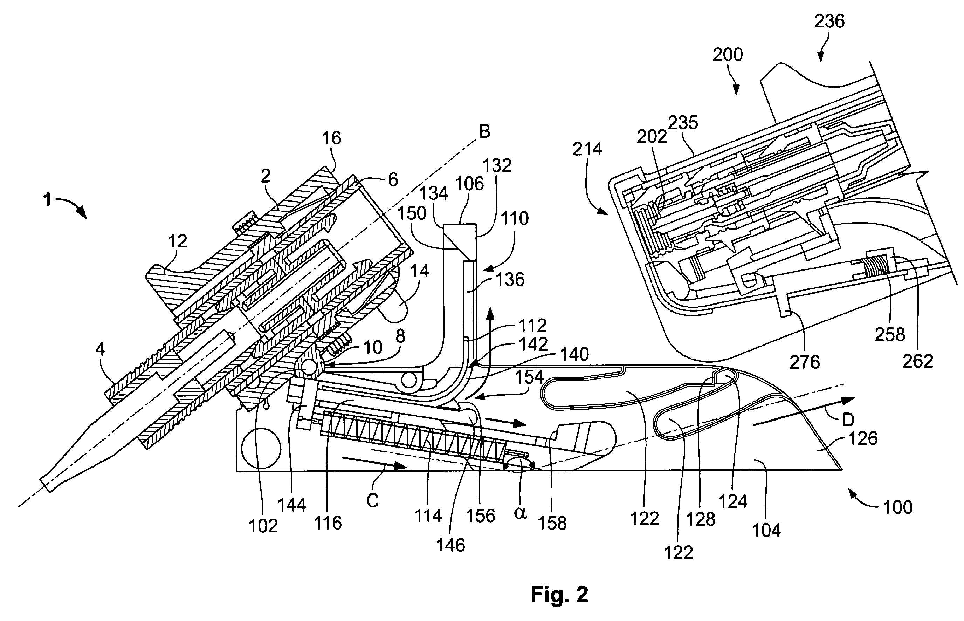

Furthermore, the tray holder gate 106 comprises a gate slot 136 at an inner side defining the tray holder gateway 110, which gate slot 136 extends in longitudinal direction of the tray holder gate 106. Said gate slot 136 is adapted to guide a tray holder shutter 112 between a closed position and an open position, respectively. The gate slot 136 communicates with a tray holder shutter guidance slot 138 formed by a tray holder shutter guidance 140 arranged at one end side of the gate slot 136 substantially inside the tray holder receiving compartment 118. Said tray holder shutter guidance 140 extends from said slot end via a guidance arc portion 142 away from the tray holder receiving compartment 118 substantially in longitudinal direction of the cable connector tray holder 100 and, further, preferably towards the tray holder support surface 108 on the side adapted to pivotably support the cable connector holder 1 (Figure 2).

The tray holder shutter 112 is made of a flexible material, such as rubber or the like, which material is capable of following the course of the tray holder shutter guidance slot 138 and the gate slot 136, respectively. Furthermore, the material of the tray holder shutter 112 is preferably adapted to sealingly close the tray holder gateway 110 to prevent passing of environmental influences, such as moisture and dust therethrough.

As can be particularly seen in Figure 2, the tray holder shutter 112 cooperates with tray holder spring means 114 arranged below the tray holder shutter guidance 140 and a lower surface side of the cable connector tray holder 100. Moreover, a tray holder movable part 116 is arranged between the tray holder spring means 114 and the tray holder shutter 112, which tray holder movable part 116 is coupled to the tray holder spring means 114 in order to be movable in spring load direction of said tray holder spring means 114, respectively. The tray holder spring means 114 are fixed at one longitudinal end side to the tray holder support 104 and at the opposed longitudinal end side to a connecting piece 144. The connecting piece 144 is coupled to the tray holder movable part 116 and to a longitudinal end of the tray holder shutter 112 in order to move the tray holder shutter 112 and the tray holder movable part 116. The connecting piece 144 is movable between the closed position of the tray holder shutter 112, which closed position corresponds to a relaxed state of the tray holder spring means 114, and the open position of the tray holder shutter 112, which open position corresponds to a tension state of the tray holder spring means 114. The connecting piece 144 is moved between said closed position and open position dependent on the compulsory guide of the tray holder movable part 116, which is compulsory guided by the cable connector tray 200 while assembling it to the cable connector tray holder 100 and disassembling it therefrom, respectively. Particularly, the tray holder movable part 116 comprises at its longitudinal end a movable part thickening 146 adapted to contact the cable connector tray 200 while it is assembled to the cable connector tray holder 100 or disassembled therefrom. Specifically, by mounting the cable connector tray 200 to the cable connector tray holder 100, the cable connector tray 200 is inserted into the tray holder receiving compartment 118. After the cable connector tray 200 is introduced into the tray holder receiving compartment 118 at least with its front part, the cable connector tray 200 contacts the movable part thickening 146, wherein while further insertion of the cable connector tray 200, the tray holder movable part 116 moves away from the tray holder receiving compartment 118 substantially towards the side of the tray holder gate 106 which side is adapted to pivotably support the cable connector holder 1. Simultaneously, the tray holder shutter 112 is moved from its closed position to its open position. Further, the tray holder spring means 114 is moved from its relaxed state towards its tensioned state. When the cable connector tray reaches its end position in the tray holder receiving compartment 118, the tray holder shutter 112 reaches its open position and the tray holder spring means 114 achieves its tensioned state. The movable part 116 is guided by a movable part guidance 154, which forms a recess through which the movable part 116 passes. The recess of the movable part guidance 154 is smaller than a thickness of the movable part thickening 146. Thereby, a movable part mechanical stop 156 is provided. Particularly, by motion of the movable part 116 toward the cable connector holder support side, the movable part 116 automatically stops at the movable part mechanical stop 154. The movable part guidance 154 further provides a second movable part mechanical stop 158, which limits the motion of the movable part 116 toward the tray holder receiving compartment side.

After the cable connector tray 200 is mounted to the cable connector tray holder 100, it may be secured in the tray holder receiving compartment 118 by means of the retractable securing protrusion 206 coming into abutment with the abutment face 128 provided with the recess-shaped tray holder guidance 122. Thus, slipping out of the cable connector tray 200 from the tray holder receiving compartment 118 due to the spring load acting on the cable connector tray 200 by contact with the movable part thickening 146 can be reliably prevented. Preferably, the spring load of the tray holder spring means 114 can be adapted to be only capable of moving the tray holder shutter 112 without being able to push the cable connector tray 200 out of the tray holder receiving compartment 118. Thereby, the retractable securing protrusion 206 and the tray holder securing means 124 can be omitted, simplifying the configuration of the cable connector tray holder 100. However, it is preferred that for the sake of reliably securing the cable connector tray 200 against the cable connector tray holder 100 to provide the cable connector tray holder 100 with the tray holder securing means 124 for cooperating with the retractable securing protrusion 206 provided with the cable connector tray 200.

As further shown in Figure 2, the moving direction of the tray holder movable part 116 substantially extends transfers to the longitudinal axis of the cable connector tray holder 100 in order to further weaken the spring load which may act on the cable connector tray 200 in its assembled state. Thus, with respect to the motion of the tray holder shutter 112 necessary to obtain its closed position, the spring load can be further increased without the risk of potentially pushing the cable connector tray 200 out of the tray holder receiving compartment 118. Further, preferably, as described above, the tray holder guidance 122 receives the cable connector tray 200 from an oblique direction relative to the longitudinal direction of the cable connector tray holder 100, whereby the spring load of the tray holder spring means 114 acting on the cable connector tray 200 in its assembled state can be further weakened. Specifically, an angle α enclosed between the moving direction C of the tray holder movable part 116 and the insertion and removing direction D of the cable connector tray 200 is smaller than 180°. In the orientation shown in Figure 2, the respective angle α is 157°.

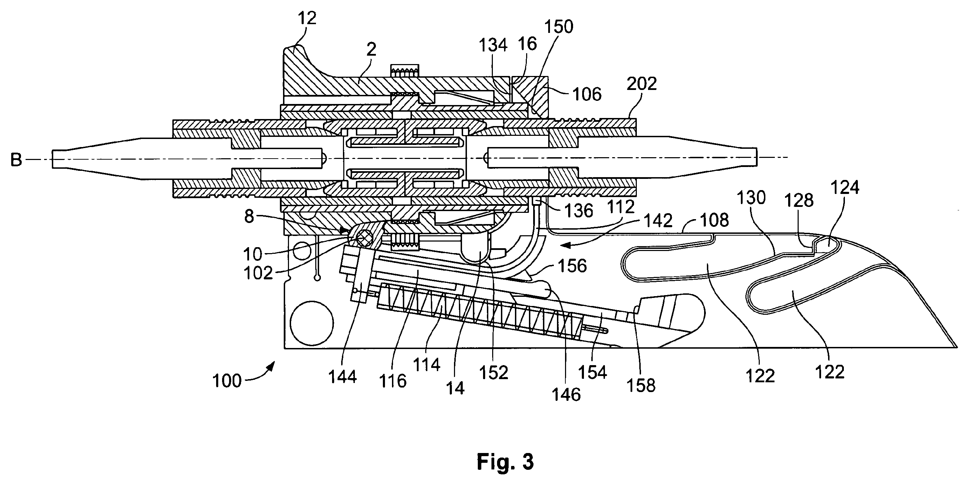

Figure 1 further shows the cable connector holder 1 according to a preferred embodiment in its mounted and non-pivoted state on the cable connector tray 100. In said state, the cable connector holder 1 abuts with its front face 16 against the opposed abutment face 134 of the tray holder gate 106. Figure 2 shows the cable connector holder 1 in a state pivoted about the pivot axis A (Figure 1). The pivoting amount of the cable connector holder 1 and the protruding height of the tray holder 106 are adapted to allow free access of the receiving opening end portion of the cable connector holder 1 in its pivoted state. Particularly, the mating end of the first cable connector 4 held by the cable connector 1 is freely accessible in the pivoted state of the cable connector holder 1. Figure 3 shows the cable connector holder 1 in a connection state with the second cable connector 202 held by the cable connector tray 200 (not shown in Figure 3).

As can be seen in Figures 1 to 3, the cable connector holder 1 comprises holding means 2 substantially having a sleeve shape and forming a passageway 6 extending coaxially with the longitudinal direction of the holding means 2. The front face 16 of the holding means 2 forms a receiving opening end portion from which side the second cable connector 202 of the cable connector tray 200 is receivable. At the opposed longitudinal end side denoting an insertion opening for the first cable connector 4, the holding means 2 provides an actuation portion 12 protruding the upper surface of the holding means 2 on a side opposed to a side on which connection means 8 for cooperating with associated tray holder connection means 102 of the cable connector tray holder 100 are arranged. In the cross-sectional view as shown in Figure 2, the actuation portion 12 forms a flange at insertion opening. The upper surface of the actuation portion 12 is preferably curved-shaped in a cross-sectional view of the holding means 2 to provide an improved handling of the cable connector holder for an user. The cable connector holder 1, i.e. the holding means 2 are preferably adapted to receive the first cable connector 4 such that the housing of the first cable connector 4 slightly protrudes the receiving opening end portion 16 of the cable connector holder 1. The first cable connector 4 is preferably an optical fibre cable connector commonly known in the technical field of telecommunications. Said first cable connector 4 can be preferably a female optical fibre cable connector or a male optical fibre cable connector. Furthermore, the first cable connector may be a combination of a cable connector with an adaptor such that at least two male or female cable connectors can be connected with each other by means of said adaptor. Accordingly, in the sense of the present invention, the cable connector received by the cable connector holder 1 may be a male cable connector, a female cable connector or an adaptor for connecting two female or male cable connectors, respectively.

Moreover, the cable connector holder 1 comprises a connection means 8 on a lower side, which opposes the side on which the actuation portion 12 is formed. Said connection means 8 is adapted to be coupled with the tray holder connection means 102 provided on the tray holder support surface 108 on the cable connector holder side with respect to the tray holder gate 106.

The connection means 8 are preferably formed of at least one ring element 10, which ring element 10 forms a through hole for receiving a rod element 102 provided with the cable connector tray holder 100. Alternatively, the connection means 8 may be preferably formed of clip means or snap means, having substantially a C or U shape to be mounted on said rod element 102. As a matter of course, instead of the rod element 102, a pin element may be provided as the tray holder connection means 102, wherein the pin element having a shorter longitudinal length than the rod element shown in Figure 1.

In general, the connection means 8 and the tray holder connection means 102 may be preferably configured such that pivoting action of the cable connector holder 1 with respect to the cable connector tray holder 100 is ensured. Thus, the tray holder connection means 102 may additionally be releasably secured against the cable connector tray holder 100. For this, the rod element 102 can be configured to be releasably from the cable connector tray holder 100 for a disassembling of the cable connector holder 1 provided with ring shaped connection means 8. Thereby, the cable connector holder 1 can be replaced in case of damage.

As further particularly shown in Figure 1, the cable connector tray holder 100 comprises a pair of tray holder ring elements 148 arranged in an opposing manner at the tray holder support surface 108. The tray holder ring elements 148 are preferably formed integral with the cable connector tray support 104 and are arranged in extension direction of the tray holder receiving compartment arms 126 from which the tray holder gate 106 protrudes. Each of the tray holder ring elements 148 provides an opening to receive the rod element 102 from a lateral side of the cable connector tray holder support 104. The axis of the rod element 102, of the opening of the tray holder ring element 148 and of the opening of the ring element 8 of the cable connector holder 1 forms the pivot axis A for the cable connector holder 1.

The cable connector holder 1 further comprises securing means 14 arranged at the receiving opening end portion 16 on the lower side of the holding means 2 on which side the connection means 8 are provided. The securing means 14 are plate-shaped and are adapted to cooperate with a tray holder receiving recess 152 provided near the tray holder gate 106 at the tray holder support surface 108 to extend therefrom towards the lower side of the tray holder support 104. The tray holder receiving recess 152 is adapted to receive the securing means 14 such that the cable connector holder 1 is aligned while pivoting the cable connector holder 1 from its pivoted state to its non-pivoted state corresponding to an alignment state with the tray holder gate 106. In said non-pivoting state of the cable connector holder 1, the securing means 14 secure the cable connector holder 1 against the cable connector tray holder 100. Preferably, the securing means 14 are formed of a snap means, wherein the associated tray holder receiving recess 152 provides associated snap means engaging the securing means 14 in the non-pivoted state of the cable connector holder 1.

As shown in Figures 2 and 3, the tray holder gate 106 comprises an upper inner rim 150 being slanted at the tray holder gate 106 side facing the cable connector holder 1 such that the upper inner rim 150 extends from the upper side of the tray holder gate 106 towards its lower side until the upper longitudinal end of the gate slot 136 is reached. Thereby, the cable connector holder 1 can be pivoted without interference with said upper inner rim 150, i.e. with the tray holder gate 106. Due to said configuration, the front face 16 of the holding means 2 is able to directly oppose the abutment face 134 of the tray holder gate 106 with a minimized gap therebetween. In order to enhance a sealing function of the cable connector tray holder 100, the upper inner rim 150 is configured such that the front face 16 abuts the abutment face 134 in the non-pivoted state of the cable connector holder 1. It is pointed out that the above-described inclined configuration of the upper inner rim 150 is provided for obtaining a minimized protruding height of the tray holder gate 106. As a matter of course, the upper inner rim 150 does not necessarily extend until it reaches the longitudinal end of the gate slot 136. The tray holder gate 106 with its upper inner rim 150 may adopt any configuration as long as the pivoting motion of the cable connector holder 1 without interference with the tray holder gate 106 is ensured. However, a small interference may be intended for providing an alternative securing of the cable connector holder 1 against the cable connector tray holder 100.

Figure 4A shows a perspective side view of the cable connector tray 200 mountable to the cable connector holder 100 according to a preferred embodiment of the present invention. Figure 4B shows a perspective side view of an open cable connector tray 200 as shown in Figure 4A. The cable connector tray 200 comprises a tray housing 210 made of an injection moulded plastic material which provides at a rear side a cable opening 212 for receiving and guiding a cable (not shown) towards an inside of the tray housing 210. Moreover, at a front side opposing the cable opening 212 in extension direction of the cable accommodated inside the tray housing 210, a cable connector opening 214 is provided for receiving the second cable connector 202. The cable is preferably an optical fiber cable commonly known in the technical field of telecommunication, wherein said optical fiber cable comprises substantially an outer jacket surrounding an optical fiber element for transmitting an optical signal.

The tray housing 210 has basically a trapezoidal shape with an extension protruding by a predetermined length in longitudinal direction of a base line of said trapezoidal shaped tray housing 210. The base line of the tray housing 210 forms the upper side of the cable connector tray 200. Said extension is formed of a sleeve portion 216 which accommodates the cable opening 212. The cable opening 212 has an inner diameter substantially equal to an outer diameter of the part of the cable passing the cable opening 212.

The sleeve portion 216 is adapted to accommodate a wrap-around cable fixation module 218 for securing the cable against the tray housing 210. Preferably, the sleeve portion 216 has a rectangular form, wherein the lower inner surface of the sleeve portion 216 provides at least one recess for receiving a protrusion provided on the lower side of the wrap-around cable fixation module 218. Thereby, the wrap-around cable fixation module 218 is secured against the sleeve portion 216 in longitudinal direction thereof. Further preferably, the wrap-around cable fixation module 218 may have a configuration basically known from the International Patent application WO 2009/040566 A1. By usage of the wrap-around cable fixation module 218, the cable can simply and reliably be secured against the tray housing 210 without depending unduly on craft skills of an installer. Moreover, the wrap-around cable fixation module 218 may provide a strain relief for the cable insertable into the cable connector tray 200.

The space provided below the base line of the trapezoidal shaped tray housing 210 forms a loop storage area 220 for storing an overlength of the cable received inside the cable connector tray 200 in a looped manner. As shown in Figure 4B, the loop storage 220 is provided by a loop storage insert 222 insertable into the tray housing 210 and fixable thereto by snap means provided at a center region of the loop storage insert 222 and the loop storage area of the tray housing 210, respectively. Particularly, the loop storage insert 222 comprises an insert base plate 224 providing a base for the looped cable, wherein insert snap means 226 protrude from said insert base plate 224 to cooperate with loop guiding means 228 such that the loop storage insert 222 can be secured inside the tray housing 210 thereagainst. Additionally, the loop storage insert 222 comprises in a center area thereof an insert center wall 230 for cooperating with tray housing snap means 232 arranged inside the tray housing 210 in the space provided below the base line. Although not shown, the loop storage insert 222 may be preferably provided with a splice holder for holding a splice formed between the cable insertable through the cable opening 212 and the cable ranging from the second connector 202. In addition, holding ribs may also be provided with the loop storage insert 222 for holding the looped cable in said loop storage area 220. Such holding ribs may be arranged as commonly known in the technical field of telecommunications. Alternatively, the cable connector tray 200 may preferably be provided without the loops storage insert, wherein the loop storage area, i.e. the tray housing 210 is configured to guide and further preferably to hold the looped cable by means of cable loop guiding and holding ribs as described above.

The tray housing 210 provides on its upper surface side a recess part forming a tray housing seat 235 slidably supporting a slidable cable connector holder 230 in longitudinal direction of the tray housing 210. The tray holder seat 235 is arranged near (adjacent to) the cable connector opening 214 and has on its lateral side a tray housing guidance slit 234 for cooperating with the slidable cable connector holder 230 as further described below. For reliably performing the sliding motion of the slidable cable connector holder 236, the tray housing seat 235 has preferably flat surfaces. The slidable cable connector holder 236 comprises a handle 238 accessible from an outside of the tray housing 210 to be manually operatable by a technician. The slidable cable connector holder 236 is slidable in longitudinal direction of the tray housing seat 235 between stop portions (stopper) 240 provided at the opposed longitudinal ends of the tray housing seat 235. The stopper 240 arranged near the cable connector opening 214 corresponds to a mating position for the slidable second cable connector 202, whereas the other opposing stop position 240 corresponds to a retracted position for the slidable cable connector holder 236. The retracted position 240 is set so as to ensure that the cable connector 202 is completely stored inside the tray housing 210. In other words, at the retracted position 240, the second cable connector 202 does not protrude the cable connector opening 214 toward the outside of the tray housing 210. The mating position 240 is set so as to ensure a reliable connection with the first cable connector 4 in the mounted state of the cable connector tray 200 and the cable connector holder 1 on the cable connector tray holder 100, respectively. The slidable cable connector holder 236 has substantially a similar outer shape than the holding means 2 of the cable connector holder 1 described above. Particularly, the slidable cable connector holder 236 comprises an actuation portion 242 at its longitudinal end side which has basically a similar shape as the actuation portion 12 of the cable connector holder 1.

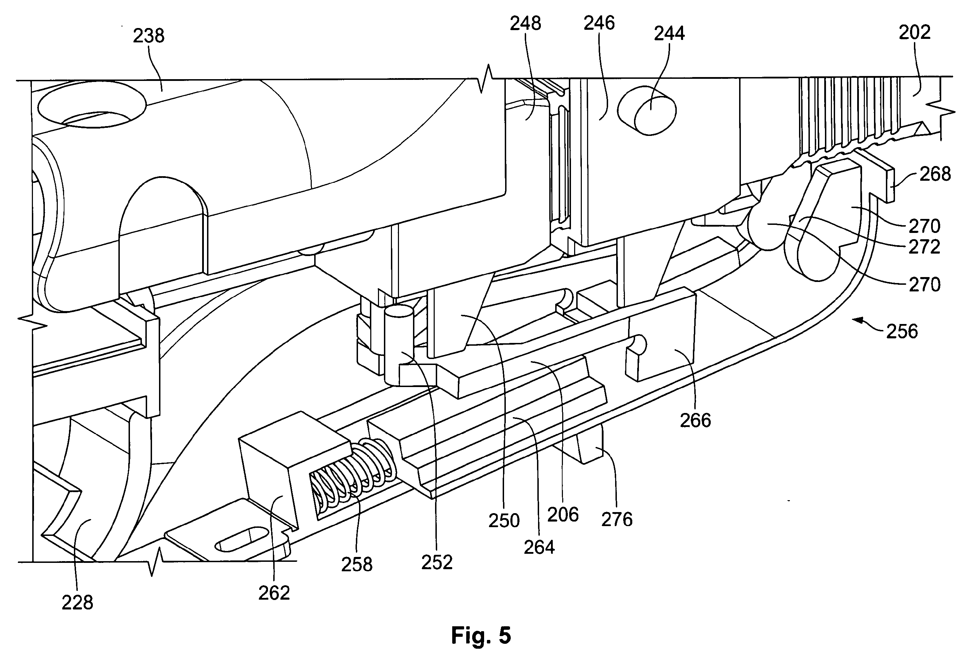

Furthermore, the slidable cable connector holder 236 comprises receiving means (not shown) adapted to receive a holding pin 244 of a holding part 246 coupled to the second cable connector 202 such that by motion of the slidable cable connector holder 236, the second cable connector 202 is movable between the mating position and the retracted position. Said holding part 246 is coupled to retraction means 248 for retracting the retractable securing protrusion 206. As shown in Figure 4B and Figure 5, the retraction means 248 comprise a fin portion 250 protruding the retraction means 248 toward the lower side of the tray housing 210. Said fin portion 250 is adapted to cooperate with a securing protrusion pin 252 connected with the retractable securing protrusion 206. Specifically, the retractable securing protrusion 206 is plate shaped, wherein the securing protrusion pin 252 protrudes an upper surface of said plate-shaped retractable securing protrusion 206 inside the tray housing 210 toward the slidable cable connector holder 236. Furthermore, at least one edge of the retractable securing protrusion 206 is configured to project the tray housing 210 through a slot provided with the tray housing 210 at its lateral side. By moving the slidable cable connector holder 236 toward the retracted position, the fin portion 250 of the holding part 246 is moved toward the securing protrusion pin 252 and contacts said securing protrusion pin 252 so as to laterally move it toward the inside of the tray housing 210 such that the retractable securing protrusion 206 is completely retracted inside the tray housing 210. Thereby, releasing of the cable connector tray 200 mounted on the cable connector tray holder 100 is enabled. In other words, the securing protrusion pin 252 is arranged in the moving direction of the fin portion 250. Furthermore, the securing protrusion pin 252 is preferably round shaped to ensure that the fin portion 250 can contact the securing protrusion pin 252 and slide it along its outer circumference such that the securing protrusion pin 252 is laterally moved toward the inside of the tray housing 210.

Figure 4A further shows a pair of guiding protrusions 204 configured to be received by the associated tray holder guidance 122 of the cable connector tray holder 100 as described above. The guiding protrusion 204 provided near the front face of the cable connector tray 200 has preferably an oval shape, whereas the other guiding protrusion 204 arranged between the retractable securing protrusion 206 and the lower side of the cable connector tray 200 is substantially round shaped. Due to said configuration, the cable connector tray 200 can be simply inserted and moved in the tray holder guidance 122 as described above.

As further shown in Figure 4A, the cable connector tray 200 comprises a sealing tag 254 at the lateral surface side of the tray housing 210, wherein said sealing tag 254 is preferably adhered to said lateral surface side. Said sealing tag 254 is further connected with the slidable cable connector holder 236. The sealing tag 254 is preferably made of a rupturable material. According thereto, the user can easily recognize whether the cable connector tray 200 has already been used. Specifically, a broken sealing tag 254 leads to the assumption that the cable connector tray 200 has been used. The sealing tag 254 can be further preferably provided with an RFID-tag, which RFID-tag can be programmed to simplify an identification of the connection obtainable with the cable connector tray 200. Said identification is performed by means of a reading device associated with the RFID-tag.

Figure 5 shows an exploded perspective side view of an area of the tray housing 210 below the second cable connector 202. As described above, said area comprises the retractable securing protrusion 206 and the means for retracting it. Moreover, below said retractable securing protrusion 206 are arranged tray shutter means 256. Said tray shutter means 256 comprises tray spring means 258 for providing a spring load to a tray shutter 260 formed of a flexible material such as rubber or the like the tray shutter 260 may be preferably of the same material as the above-described tray holder shutter 112. The tray spring means 258 are arranged between a spring means support 260 arranged at one longitudinal end side of the tray shutter means 256 and the tray shutter 260, respectively. The tray shutter 260 provides a stabilizing and guiding portion 264 at the longitudinal end of the tray shutter 260 abutting against the tray spring means 258. The stabilizing and guiding portion 264 has cross-sectionally a stepwise configuration to provide a sufficient abutment surface for the tray spring means 258 and a stabilizing and guiding feature for the motion of the tray shutter 260. Particularly, the stabilizing and guiding portion 264 slides along a shutter guiding protrusion 266 coupled to the retractable securing protrusion 206 and protruding therefrom towards the lower side of the tray housing 210. Said shutter guiding protrusion 266 is adapted to slide along the stepwise outer shape of the stabilizing and guiding portion 264, when the tray shutter 260 is moved toward the cable connector opening 214.

At the opposed longitudinal end of the tray shutter 260, said tray shutter 260 comprises a hammerhead-shaped shutter end 268 partially covering the cable connector opening 214 in a retracted position of the tray shutter 260. Specifically, the side protrusions of said hammerhead-shaped shutter end 268 abut against a rim portion of the tray housing 210, which rim portion defines the cable connector opening 214. For this, the tray housing 210 has a larger width in its thickness direction at the region where the cable connector opening 214 is provided than a width in its thickness direction in the region below the lower end of the cable connector opening 214, in which region the retractable securing protrusion 206 and the tray shutter means 256 are provided.

Moreover, the tray shutter 260 comprises a shutter ramp 270 on a side, which faces the inside of the tray housing 210, wherein the shutter ramp 270 extends from the hammerhead shutter end 268 towards the opposed longitudinal end of the tray shutter 260. Said shutter ramp 270 provides a ramp sliding surface 272 for sliding along a lower edge of a front face of the second cable connector 202 when said second cable connector 202 is pushed towards the outside of the tray housing 210 by respective motion of the slidable cable connector holder 236. Particularly, the shutter ramp 270 decreases continuously in thickness towards the hammerhead shutter end 268. In other words, the thickness of the shutter ramp 270 at the hammerhead shutter end 268 is smaller than the thickness distant from said hammerhead shutter end 268 in longitudinal direction of the tray shutter means 256. Accordingly, by moving the second cable connector 202 to the outside of the tray housing 210 through the cable connector opening 214, the tray shutter 260 is pushed downwards against the spring load provided by the tray spring means 258 due to sliding contact of the lower edge of the front face of the second cable connector 202 with the ramp sliding surface 272. By further motion of the second cable connector 202 toward the mating position, the tray shutter 260 is pushed towards the lower side of the tray housing 210 until the hammerhead shutter end 268 reaches its retracted position, whereby the cable connector opening 214 is completely opened.

As further shown in Figure 5, the tray shutter means 256 comprises a shutter fixed link 276 arranged on a lower side of the tray shutter 260, which lower side is opposed to side on which the shutter ramp 270 is arranged. The shutter fixed link 276 extends transfers to the longitudinal direction of the tray shutter 260 and forms a mechanical stop in the retracted position of the tray shutter means 256 by abutting against the inner surface of the lower side of the tray housing 210 (Figure 4B). Thereby, a further stabilization of the flexible material made tray shutter 260 can be obtained. Similar effect can be preferably achieved in the closed position of the tray shutter 260, in which closed position the shutter fixed link 276 is adapted to abut against the inner surface of the tray housing 210 at a position nearer to the cable connector opening 214. Accordingly, besides the further stabilization of the tray shutter 260, said mechanical stop preferably defines the retracted position and the closed position of the tray shutter means 256 accordingly.

Figure 6 shows a side view of a cable connection device 300 according to a preferred embodiment. The cable connection device 300 comprises the cable connector tray holder 100, the cable connector tray 200 and the cable connector holder 1 (not shown in Figure 6) as described above.

### Reference list

- 1: cable connector holder
- 2: holding means
- 4, 202: cable connector
- 6: passageway
- 8: connection means
- 10: ring element
- 12, 242: actuation portion
- 14: securing means
- 16: front face
- 100: cable connector tray holder
- 102: tray holder connection means
- 104: tray holder support
- 106: tray holder gate
- 108: tray holder support surface
- 110: tray holder gateway
- 112: tray holder shutter
- 114: tray holder spring means
- 116: tray holder movable part
- 118: tray holder receiving compartment
- 120: tray holder guiding and securing means
- 122: tray holder guidance
- 124: tray holder securing means
- 126: tray holder receiving compartment arm
- 128: abutment face
- 130: recess wall
- 132: tray abutment face
- 134: holder abutment face
- 136: gate slot
- 138: tray holder shutter guidance slot
- 140: tray holder shutter guidance
- 142: guidance arc portion
- 144: connecting piece
- 146: movable part thickening
- 148: tray holder ring element
- 150: upper inner rim of the tray holder gate
- 152: securing means receiving recess
- 154: movable part guidance
- 156, 158: movable part mechanical stop
- 200: cable connector tray
- 204: guiding protrusion
- 206: retractable securing protrusion
- 208: longitudinal end face
- 210: tray housing
- 212: cable opening
- 214: cable connector opening
- 216: sleeve portion
- 218: cable fixation module
- 220: loop storage area
- 222: loop storage insert
- 224: insert base plate
- 226: insert snap means
- 228: loop guiding means
- 230: insert center wall
- 232: tray housing snap means
- 234: tray housing guidance slit
- 235: tray housing seat
- 236: slidable cable connector holder
- 238: handle
- 240: stop position
- 244: holding pin
- 246: holding part
- 248: retraction means
- 250: fin portion
- 252: securing protrusion pin
- 254: sealing tag
- 256: tray shutter means
- 258: tray spring means
- 260: tray shutter
- 262: spring means support
- 264: stabilizing and guiding portion
- 266: shutter guiding protrusion
- 268: hammerhead shutter end
- 270: shutter ramp
- 272: ramp sliding surface
- 274: splice holder
- 276: shutter fixed link
- 300: cable connection device
- A: pivot axis
- B: center axis of the passageway
- C: moving direction of the tray holder movable part
- D: insertion and removing direction of the cable connector tray
- α: angle between C and D

## Claims

1. A cable connector tray holder (100) for supporting at least a first cable connector (4) and a second cable connector (202) connectable with each other, the cable connector tray holder (100) comprises a tray holder support (104) for supporting and aligning mating ends of said cable connectors (4, 202) in a facing manner; wherein the tray holder support (104) has tray holder connection means (102) for connecting a cable connector holder (1) with the tray holder support (104), which cable connector holder (1) is adapted to hold said first cable connector (4);
wherein said tray holder connection means (102) are configured to pivotably support the cable connector holder (1) about a pivot axis (A) extending in a direction transverse to a mating direction (B) of said cable connectors (4, 202),
**characterized in that**
the cable connector tray holder (100) further comprises
a tray holder gate (106) which is arranged stationary and protrudes a tray holder support surface (108) of the cable connector tray holder (100), which tray holder support surface (108) is provided for supporting at least said first cable connector (4) and said second cable connector (202), wherein the tray holder gate (106) comprises an upper inner rim (150) being slanted at a tray holder gate side facing the cable connector holder (1) so that the cable connector holder (1) can be pivoted without interference with said upper inner rim (150) and wherein the tray holder gate (106) forms a tray holder gateway (110) for passing therethrough said first cable connector (4) to enable connection therebetween.

2. The cable connector tray holder (100) according to claim 1, **characterized by** a slidable tray holder shutter (112) adapted to cover the tray holder gateway (110) in a disassembled state of the second cable connector (202) and to open the tray holder gateway (110) as a result of an assembly of said second cable connector (202).

3. The cable connector tray holder (100) according to claim 2, **characterized by** spring means (114) providing a spring-load to a tray holder movable part (116) retractably projecting into a tray holder receiving compartment (118) of the cable connector tray holder (100), which tray holder receiving compartment (118) is provided for receiving and releasably securing a cable connector tray (200) supporting the second cable connector (202), wherein the tray holder movable part (116) is retractable against the spring load via contact with the cable connector tray (200) while insertion thereof into the tray holder receiving compartment (118) and extractable via the spring load while removing the cable connector tray (200) from the tray holder receiving compartment (118), and wherein the tray holder movable part (116) is connected with the tray holder shutter (112) so as to slide the tray holder shutter (112) to an open position while said insertion of the cable connector tray (200), and to a closed position while said removing thereof.

4. A cable connection device (300) comprising
a cable connector holder (1) for holding a first cable connector (4),
a cable connector tray (200) for holding a second cable connector (202), and
a cable connector tray holder (100) according to any one of claims 1 to 3.

5. The cable connection device (300) according to claim 4, **characterized in that** the cable connector holder (1) comprises
holding means (2) adapted to at least partially encompass the cable connector (4) in circumferential direction thereof, thereby forming a passageway (6) for the cable connector (4); and
connection means (8) for connecting the cable connector holder (1) to the cable connector tray holder (100),
wherein
the connection means (8) are adapted to pivotably support the cable connector holder (1) about the pivot axis (A) extending in a direction transverse to a longitudinal direction (B) of the passageway (6) wherein the pivot axis (A) is arranged stationary.

6. The cable connection device (300) according to claim 5, **characterized in that** the connection means (8) of the cable connection holder (1) are adapted to be movably connectable with associated tray holder connection means (102) of the cable connector tray holder (100) by means of form fit.

7. The cable connection device (300) according to claim 5 or 6" **characterized in that** the connection means (8) provides either at least one ring element (10) providing a through hole for receiving a tray holder pin element provided with tray holder connection means (102) of the cable connector tray holder (100), which pin element extends coaxially with the pivot axis (A), or at least one pin element extending coaxially with the pivot axis (A) and being adapted to be received by a tray holder ring element provided with the cable connector tray holder (100).

8. The cable connection device (300) according to any one of the claims 5 to 7, **characterized in that** the holding means (2) comprises an actuation portion (12) on a surface side opposing the surface side on which the connection means (8) are arranged, for pivoting the cable connector holder (1).

9. The cable connection device (300) according to claim 8, **characterized in that** the connector holder (1) has a sleeve shape, wherein the actuation portion (12) is arranged at an end of said handling means (2) opposed to the receiving opening of said cable connector holder (1) for receiving a mating end of a second cable connector (202).

10. The cable connection device (300) according to any one of the claims 5 to 9, **characterized in that** the connector holder (1) has securing means (14) for releasably securing the cable connector holder (1) against the cable connector tray holder (100), wherein the securing means (14) are provided on a receiving opening end portion of said holding means (2).

11. The cable connection device (300) according to any one of the claims 5 to 10, **characterized in that** the cable connector holder (1) is formed of two parts connectable with each other in radial direction of the passageway (6) formed by said two parts in an assembled state of the cable connector holder (1).

## Patentansprüche

1. Eine Kabelverbinderträgerhalterung (100) zum unterstützen zumindest eines ersten Kabelverbinders (4) und eines zweiten Kabelverbinders (202), welche miteinander verbindbar sind,
die Kabelverbinderträgerhalterung (100) umfasst eine Trägerhalterungsunterstützung (104) zum unterstützen und Ausrichten von zusammenpassenden Enden der Kabelverbinder (4, 202) in einer Weise, sodass sie sich einander gegenüberliegen;
wobei die Trägerhalterungsunterstützung (104) Trägerhalterverbindungsmittel (102) für den Anschluss einer Kabelverbinderhalterung (1) mit der Trägerhalterungsunterstützung aufweist, welche Kabelverbinderhalterung (1) angepasst ist zum Halten der ersten Kabelverbinders (4);
wobei die Trägerhalterverbindungsmittel (102) so konfiguriert sind, um die Kabelverbinderhalterung (1) um eine Schwenkachse (A) welche sich in einer Richtung quer zu einer Eingriffsrichtung (B) der Kabelverbinder (4, 202) erstreckt, schwenkbar zu unterstützen,
**dadurch gekennzeichnet, dass**
die Kabelverbinderträgerhalterung (100) weiterhin umfasst ein Trägerhalterungstor (106), welches stationär angeordnet und eine Trägerhalterstützfläche (108) der Kabelverbinderträgerhalterung (100) überragt,
welche Trägerhalterstützfläche (108) für die Unterstützung zumindest des ersten Kabelverbinders (4) und des zweiten Kabelverbinders (202) vorgesehen ist,
wobei das Trägerhalterungstor (106) einen oberen inneren Rand (150) welcher der Kabelverbinderhalterung (1) gegenüberliegt, schräg ausgerichtet ist,
so dass die Kabelverbinderhalterung (1) ohne Störung mit dem oberen inneren Rand (150) verschwenkt werden kann, und wobei das Trägerhalterungstor (106) einen Trägerhalterungsdurchgang (110) zum Durchlassen des ersten Kabelverbinders (4) bildet, um eine Verbindung um eine Verbindung dazwischen zu ermöglichen.

2. Die Kabelverbinderträgerhalterung (100) nach Anspruch 1,
**gekennzeichnet durch** einen verschiebbare Trägerhalterverschließer (112) welcher angepasst ist, den Trägerhalterungsdurchgang (110) in einem ausgebauten Zustand des zweiten Kabelverbinders (202) zu verschließen und den Trägerhalterungsdurchgang (110) als Ergebnis des Einbaus des zweiten Kabelverbinders (202) zu öffnen.

3. Die Kabelverbinderträgerhalterung (100) nach Anspruch 2, **gekennzeichnet durch** Federmittel (114), die eine Federbelastung auf ein beweglichen Trägerhalterungsteil (116) ausüben, welcher zurückziehbar in eine Trägerhalterungsaufnahmeraum (118) der Kabelverbinderträgerhalterung (100),
welcher Trägerhalterungsaufnahmeraum (118) zur Aufnahme und lösbaren Befestigen eines Kabelverbinderträgers (200), welcher den zweiten Kabelverbinder (202) unterstützt, vorgesehen ist,
wobei der beweglichen Trägerhalterungsteil (116) zurückziehbar über den Kontakt mit dem Kabelverbinderträgers (200), gegen eine bereitgestellte Federlast ist, während dieser in den Trägerhalterungsaufnahmeraum (118) eingeführt wird, und
ausziehbar mittels der Federlast ist, während der Kabelverbinderträgers (200) in den Trägerhalterungsaufnahmeraum (118) eingeführt wird, und wobei der bewegliche Trägerhalterungsteil (116) mit dem Trägerhalterverschließer (112) verbunden ist, um den Trägerhalterverschließer (112) in eine offene Position zu schieben während der Einführung des Kabelverbinderträgers (200), und in eine geschlossene Position beim Herausziehen desselben.

4. Eine Kabelverbindungsvorrichtung (300) welche
eine Kabelverbindungshalterung (1) zum Halten eines ersten Kabelverbinders (4),
einen Kabelverbinderträgers (200) zum Halten eines zweiten Kabelverbinders (202) und
eine Kabelverbinderträgerhalterung (100) nach einem der Ansprüche 1 bis 3 enthält.

5. Die Kabelverbindungsvorrichtung (300) nach Anspruch 4, **dadurch gekennzeichnet, dass** die Kabelverbindungshalterung (1) aufweist
Haltemittel (2) welche angepasst ist um den Kabelverbinder (4) wenigstens teilweise in Umfangsrichtung desselben zu umfassen, um dadurch einen Durchgang (6) für den Kabelverbinder (4) zu bilden; und
Verbindungsmittel (8) zum Anschluss der Kabelverbindungshalterung (1) an der Kabelverbinderträgerhalterung (100),
wobei die Verbindungsmittel (8) angepasst sind, um die Kabelverbinderhalterung (1) um eine Schwenkachse (A) welche sich in einer Richtung quer zu einer Eingriffsrichtung (B) der Kabelverbinder (4, 202) erstreckt, schwenkbar zu unterstützen, wobei die Schwenkachse (A) stationär angeordnet ist.

6. Die Kabelverbindungsvorrichtung (300) nach Anspruch 5, **dadurch gekennzeichnet, dass** die Verbindungsmittel (8) der Kabelverbinderhalterung (1) angepasst sind um mittels Formschluss beweglich mit dem zugehörigen Trägerhalterungsverbindungsmittel (102) des Kabelverbinders (100) zu sein.

7. Die Kabelverbindungsvorrichtung (300) nach Anspruch 5 oder 6, **dadurch gekennzeichnet, dass** die Verbindungsmittel (8) entweder
mindestens ein Ringelement (10), welches eine Durchgangsöffnung aufweist zur Aufnahme eines Trägerhalterstiftelement, welches an dem Trägerhalterverbindungsmittel (102) der Kabelverbinderträgerhalterung (100) vorgesehen ist, welches Stiftelement sich koaxial mit der Schwenkachse (A) erstreckt,
oder mindestens ein Stiftelement, das sich koaxial mit der Schwenkachse (A) erstreckt und angepasst ist, um von dem Ringelement (10) aufgenommen zu werden , welches an dem Kabelverbinder (100) vorgesehen ist.

8. Die Kabelverbindungsvorrichtung (300) nach einem der Ansprüche 5 bis 7, **dadurch gekennzeichnet, dass**
Das Haltemittel (2) einen Betätigungsabschnitt (12) zum Schwenken des Kabelverbindungshalters (1) aufweist, welcher auf einer Oberfläche vorgesehen ist, die derjenigen gegenüberliegt auf welcher die Verbindungsmittel (8) angeordnet sind.

9. Die Kabelverbindungsvorrichtung (300) nach Anspruch 8, **dadurch gekennzeichnet, dass** der Verbindungshalter (1) eine Hülsenform aufweist, wobei der Betätigungsabschnitt (12) an einem Ende der Handhabungseinrichtung (2) vorgesehen ist, welche gegenüberliegend angeordnet ist zu der Aufnahmeöffnung des Kabelverbindungshalters (1) zur Aufnahme eines passenden Endes eines zweiten Kabelverbinders (202).

10. Die K Kabelverbindungsvorrichtung (300) nach einem der Ansprüche 5 bis 9, **dadurch gekennzeichnet, dass** der Verbindungshalter (1) Sicherungsmittel (14) aufweist, zur lösbaren Befestigung des Kabelverbindungshalterung (1) von der Kabelverbinderträgerhalterung (100),
wobei die Sicherungsmittel (14) an einem Endabschnitt der Aufnahmeöffnung der Halteeinrichtung (2) vorgesehen sind.

11. Die Kabelverbindungsvorrichtung (300) nach einem der Ansprüche 5 bis 10, **dadurch gekennzeichnet, dass** die Kabelverbindungshalterung (1) aus zwei Teilen gebildet ist, welche miteinander in radialer Richtung des Durchgangs (6) verbindbar sind, welcher in einem montierten Zustand der Kabelverbindungshalterung (1) durch die zwei Teile gebildet wird.

## Revendications

1. Support de plateau de connecteur de câble (100) pour supporter au moins un premier connecteur de câble (4) et un second connecteur de câble (202) pouvant être connectés l'un à l'autre, le support de plateau de connecteur de câble (100) comprenant un base de support de plateau (104) pour supporter et aligner les extrémités d'accouplement desdits connecteurs de câble (4, 202) en vis-à-vis ; dans lequel le base de support de plateau (104) comporte des moyens de connexion de support de plateau (102) pour connecter un support de connecteur de câble (1) avec la base de support de plateau (104), support de connecteur de câble (1) qui est adapté à maintenir ledit premier connecteur de câble (4) ;
dans lequel lesdits moyens de connexion de support de plateau (102) sont configurés pour supporter en pivotement le support de connecteur de câble (1) autour d'un axe de pivotement (A) s'étendant dans une direction transversale par rapport à la direction d'accouplement (B) desdits connecteurs de câble (4,202),
**caractérisé en ce que**
le support de plateau de connecteur de câble (100) comprend en outre
une porte de support de plateau (106) qui est agencée immobile et dépasse la surface de base du support de plateau (108) du support de plateau de connecteur de câble (100), surface de base du support de plateau (108) qui est prévue pour supporter au moins ledit premier connecteur de câble (4) et ledit second connecteur de câble (202), dans lequel la porte de support de plateau (106) comprend un bord interne supérieur (150) incliné du côté de la porte de support de plateau tournée vers le support de connecteur de câble (1), de sorte qu'on peut faire pivoter le support de connecteur de câble (1) sans gêner ledit bord interne supérieur (150) et dans lequel la porte de support de plateau (106) forme un point d'accès de support de plateau (110) destiné à être traversé par ledit premier connecteur de câble (4) pour permettre une connexion entre eux.

2. Support de plateau de connecteur de câble (100) selon la revendication 1, **caractérisé par** un volet de support de plateau coulissant (112) adapté à recouvrir le point d'accès de support de plateau (110) dans un état démonté du second connecteur de câble (202) et à ouvrir le point d'accès de support de plateau (110) en conséquence de l'assemblage dudit second connecteur de câble (202).

3. Support de plateau de connecteur de câble (100) selon la revendication 2, **caractérisé par** des moyens de ressort (114) fournissant une charge de ressort à une partie mobile de support de plateau (116) se projetant de manière rétractable dans un compartiment de réception de support de plateau (118) du support de plateau de connecteur de câble (100), compartiment de réception de support de plateau (118) qui est prévu pour recevoir et fixer de manière amovible un plateau de connecteur de câble (200) supportant le second connecteur de câble (202), dans lequel la partie mobile de support de plateau (116) est rétractable à l'encontre de la charge de ressort par l'intermédiaire d'un contact avec le plateau de connecteur de câble (200) pendant son insertion dans le compartiment de réception de support de plateau (118) et extractible par l'intermédiaire de la charge de ressort en retirant le plateau de connecteur de câble (200) du compartiment de réception de support de plateau (118), et dans lequel la partie mobile de support de plateau (116) est connectée au volet de support de plateau (112) de façon à faire coulisser le volet de support de plateau (112) dans une position ouverte pendant ladite insertion du plateau de connecteur de câble (200) et dans une position fermée pendant ledit retrait de celle-ci.

4. Dispositif de connexion de câble (300) comprenant
un support de connecteur de câble (1) pour maintenir un premier connecteur de câble (4),
un plateau de connecteur de câble (200) pour maintenir un second connecteur de câble (202), et
un support de plateau de connecteur de câble (100) selon l'une quelconque des revendications 1 à 3.

5. Dispositif de connexion de câble (300) selon la revendication 4, **caractérisé en ce que** le support de connecteur de câble (1) comprend
des moyens de maintien (2) adaptés à englober au moins partiellement le connecteur de câble (4) dans sa direction circonférentielle, de façon à former un passage (6) pour le connecteur de câble (4) ; et
des moyens de connexion (8) pour connecter le support de connecteur de câble (1) au support de plateau de connecteur de câble (100),
dans lequel
les moyens de connexion (8) sont adaptés à supporter en pivotement le support de connecteur de câble (1) autour de l'axe de pivotement (A) s'étendant dans une direction transversale par rapport à la direction longitudinale (B) du passage (6) dans lequel l'axe de pivotement (A) est agencé immobile.

6. Dispositif de connexion de câble (300) selon la revendication 5, **caractérisé en ce que** les moyens de connexion (8) du support de connecteur de câble (1) sont adaptés à pouvoir être connectés de façon mobile avec des moyens de connexion de support de plateau associés (102) du support de plateau de connecteur de câble (100) par complémentarité de forme.

7. Dispositif de connexion de câble (300) selon la revendication 5 ou 6, **caractérisé en ce que** les moyens de connexion (8) fournissent soit au moins un élément annulaire (10) fournissant un trou traversant pour recevoir un élément de broche de support de plateau muni des moyens de connexion de support de plateau (102) du support de plateau de connecteur de câble (100), élément de broche qui s'étend de manière coaxiale avec l'axe de pivotement (A), soit au moins un élément de broche s'étendant de manière coaxiale avec l'axe de pivotement (A) et adapté à être reçu par un élément annulaire de support de plateau muni du support de plateau de connecteur de câble (100).

8. Dispositif de connexion de câble (300) selon l'une quelconque des revendications 5 à 7, **caractérisé en ce que** les moyens de maintien (2) comprennent une partie d'actionnement (12) sur un côté de surface opposé au côté de surface sur lequel sont agencés les moyens de connexion (8) pour faire pivoter le support de connecteur de câble (1).

9. Dispositif de connexion de câble (300) selon la revendication 8, **caractérisé en ce que** le support de connecteur (1) possède une forme de manchon, dans lequel la partie d'actionnement (12) est agencée à une extrémité desdits moyes de maintien (2) opposée à l'ouverture de réception dudit support de connecteur de câble (1) pour recevoir une extrémité d'accouplement d'un second connecteur de câble (202).

10. Dispositif de connexion de câble (300) selon l'une quelconque des revendications 5 à 9, **caractérisé en ce que** le support de connecteur (1) comporte des moyens de fixation (14) pour fixer de manière amovible le support de connecteur de câble (1) contre le support de plateau de connecteur de câble (100), dans lequel les moyens de fixation (14) sont prévus sur une partie d'extrémité d'ouverture de réception desdits moyens de maintien (2).

11. Dispositif de connexion de câble (300) selon l'une quelconque des revendications 5 à 10, **caractérisé en ce que** le support de connecteur de câble (1) est formé de deux parties pouvant être connectées l'une à l'autre dans la direction radiale du passage (6) formé par lesdites deux parties dans un état assemblé du support de connecteur de câble (1).
